# EUROPEAN PATENT SPECIFICATION

(11) **EP 1 185 159 B1**
(45) Date of publication and mention of the grant of the patent: **27.08.2003**
(21) Application number: 00942534.9
(22) Date of filing: 14.06.2000
(51) Int. Cl.: A01G 9/12, A01G 23/04

(54) **PLANT SUPPORT AND METHOD FOR MANUFACTURING SUCH PLANT SUPPORT**
PFLANZENSTÜTZE UND VERFAHREN ZUR HERSTELLUNG SOLCHER PFLANZENSTÜTZEN
SUPPORT POUR PLANTE ET PROCEDE DE FABRICATION CORRESPONDANT

(30) Priority: 14.06.1999 NL 1012317; 14.12.1999 NL 1013842
(43) Date of publication of application: 13.03.2002
(73) Proprietor: Dartdijk N.V., Curacao (AN)
(72) Inventor: JANSSEN, Henricus, Wilhelmus, Theodorus, NL-6581 KD Malden (NL)
(74) Representative: Prins, Adrianus Willem
(86) International application number: NL0000411
(87) International publication number: WO00076295

(56) References cited:
- EP-A- 0 517 117
- WO-A-81/01639
- FR-A- 2 573 971
- GB-A- 2 055 281
- GB-A- 2 177 889
- NL-A- 8 700 470
- US-A- 4 961 284
- US-A- 5 018 300
- US-A- 5 311 700

## Description

The invention relates to a method for manufacturing a plant support according to the preamble of claim 1. Such method is known from US 5,311,700.

In this known method a container is provided, manufactured of wire mesh, which is layered on the inside with water permeable, non-biodegradable polyurethane. Roots of plants growing inside said container can grow through said polyurethane and will form thin air roots outside said foil. The plants, such as trees, can be planted together with said container and liner.

NL 8700470 discloses a method for planting using a combined holder and support. In this method a container is used made of wire mesh, closed on the upper side. In this container a growing medium, such as earth is introduced, in which plants are grown in a position away from the position in which the container is to be finally used. The container can only be moved together with the growing medium when said plants have rooted sufficiently to hold together said growing medium. No indication for use of a covering material is given in this publication.

From practice, plant supports are known in the form of plastic boxes having a closed bottom and sidewall. In these boxes, soil or another growth medium is poured wherein a plant is placed, which plant is raised in this box. For that matter, "plant" should in this context be understood to include at least a plant, tree, shrub or the like. During raising of the plant in question, the roots thereof will grow against the wall and bottom of the pot and, upon further growth, will extend along the inside of the wall. When the plant has been raised sufficiently, it is removed from the pot, together with the ball formed in the pot, and is dug in in a soil suitable therefor, in which the plant is to be further cultivated. Because the roots in the pot have grown along the wall, it will take a relatively long time, after transplanting, before the roots will spread in the surrounding soil. This means that further growth is at least temporarily impeded, while, moreover, the relevant plant will fix itself in the soil only after a relatively long time. This is particularly disadvantageous when relatively large plants are to be transplanted, because at least initially, these plants will have insufficient stability. A further drawback of these known pots is that the plant with the ball should be taken out of the pot, after which the pot should be removed. This is labor-intensive, relatively costly and, moreover, environmentally burdensome.

It has already been proposed to manufacture pots from reed or peat dust, which pots have been pressed. Such pots have as a drawback that they are of weak construction, while moreover, to these pots it likewise applies that the roots will grow on the inside along the wall. Moreover, the storage lives of such pots is relatively short, which means that plants cultivated therein should be transplanted relatively quickly, because otherwise the pot will have decomposed so far that it will no longer have any constructional firmness whatsoever and the roots will already have grown so far that the plant can no longer be transplanted without damage.

The object of the invention is to provide a method for manufacturing a plant support of the type described in the preamble, which method results in a plant support wherein the drawbacks of the known plant supports are avoided, while the advantages thereof are maintained. To that end, a method according to the invention is characterized by the features of claim 1.

In a method according to the invention, a box-shaped element is used having a relatively open wall structure, such that in principle, soil could fall therethrough while roots could grow without any obstruction to the outside through said relatively open structure. According to the invention, this box-shaped element is lined such that said partially open wall is covered at least partially, allowing soil or a like growth medium to be easily introduced into the box-shaped element without possibly passing outside through said openings. This involves the use of a covering material which is biodegradable and has such a structure that soil, at least the comparable growth medium to be applied, cannot pass through, while roots of a plant to be cultivated in the relevant growth medium can easily grow through the relevant covering material and the above-mentioned openings. Thus, a plant support is obtained which can readily be placed in or on the soil, such that the roots can grow through the covering material to the outside of the box-shaped element and into the surrounding soil for anchoring the plant and, during further cultivation, for supplying the required growth substances. Preferably, the box-shaped element, during use, is at least largely dug in in said soil.

With a plant support manufactured according to this method, plants can be cultivated in a simple manner, while the plant support can be disposed entirely above the ground. Roots will grow at least partially into the covering material, in a direction enclosing an angle other than 180 degrees with the relevant part of the wall of the pot, for instance substantially at right angles thereto. When the roots, in particular relatively small roots such as the root hairs, pass through the covering material, they come within the reach of (day)light, as a result of which the growth will brake or even stop at least for the time being. When the plant support is subsequently dug in in the ground at least partially, the roots, then extending under the ground, will grow further, so that a good anchoring and nutrition becomes possible. During the cultivation of the plant, the box-shaped element will provide for sufficient constructional strength of the plant support, so that it can be picked up and displaced in a simple manner. To this end, the plant support offers sufficient handling possibilities, while the plant support can moreover be secured to the ground in a relatively simple manner by means of the box-shaped element. When, during use, the plant support is dug in in the ground only partially, the parts projecting from the ground can easily be covered for embellishing the appearance and closing off the partially open wall parts. However, the plant support may also be used uncovered.

In an advantageous embodiment, a method according to the invention is further characterized by the features of claim 2.

By manufacturing the box-shaped element from a mesh-shaped material, sufficient bearing capacity and support of the covering material can readily be obtained, while, moreover, a sufficiently open structure of the wall is maintained. By using the mesh-shaped structure for both the wall and the bottom of a box-shaped element, it is moreover provided that roots can also grow through the bottom of the box-shaped element. During raising of the plant up to its transplantation, the box-shaped element can then simply be placed on a closed base or disposed such that also the bottom side of the box-shaped element comes into contact with daylight, to prevent continued growth of the roots.

Further, a method according to the present invention is preferably characterized by the features of claim 4.

The use of natural materials, in particular natural fibers and binding agent, offers the advantage that a particularly environmentally friendly plant support is obtained. Preferably, in a method according to the invention, coco fibers and binding agent such as latex are used, while simply through a suitable choice of the dimensions of the coco fibers, the type of binding agent and the ratio thereof, covering material can be obtained of different degrees of open structure and time that this structure is maintained, so that in each case, a suitable covering material can be chosen, for instance depending on the plant to be cultivated, the expected period from raising to transplanting and the like.

In further elaboration, a method according to the invention is further characterized by the features of claim 8.

The use of at least one substantially vertically extending guide element in a plant support according to the present invention offers the advantage that during use, plants cultivated in the plant support can readily be guided along the guide element, for support thereof. Because the guide element is secured in or to the box-shaped element or forms an integral part thereof, the additional advantage achieved is that the guide element is readily kept in the desired position without further necessitating trestles or like measures. Indeed, sufficient anchoring of the box-shaped element or at least the plant in the soil, after transplantation, will provide for sufficient stability of the guide element.

The invention further relates to a method for cultivating plants and the like, characterized by the features of claim 9.

Such method offers the advantage that in a particularly simple manner, plants or the like can be cultivated in a first position, whereafter the plants together with the plant support can be picked up and displaced into an operating position, wherein the plant support can, for instance, be secured in or to the ground, be dug in entirely or partially or put down on the ground. This means that for consumers, at least end users, relatively full-grown plants become available relatively quickly.

The invention further relates to a method for manufacturing a hedge, characterized by the features of claim 13.

With a method according to the present invention, loose hedge elements can be manufactured with guidable, relatively fast-growing plants, so that relatively quickly, a substantially closed surface can be obtained. This means that for a user, a hedge forming a suitable separation can be obtained in a relatively fast manner. Moreover, hedge elements can thus be obtained from plants which are normally not directly suitable for forming a hedge, because these plants cannot, or at least not without any problem, grow to the desired height independently.

Through the use of box-shaped elements with guide elements connected thereto, the advantage achieved is that the entirely or partially full-grown hedge elements can readily be picked up and displaced. Thus, for instance hedge elements can be positioned and prepared as prefab elements on a suitable location, such as in a greenhouse or at an agricultural or horticultural farm, to obtain the desired hedge elements with substantially closed plant surface, whereafter the relevant hedge elements can be picked up and displaced to the position where they are to be used, for instance a garden, park, exhibition or the like. The advantage thus achieved is that an end user directly disposes of a hedge, or at least a hedge element, which is full-grown such that the desired separation is obtained. The box-shaped element provides that the entire hedge element can be picked up at once, including the relevant plants and the associated roots. This simply prevents the plants from being adversely affected by the displacement.

By linking a series of hedge elements formed according to the invention, a hedge of relatively great length can be obtained.

The invention further relates to a plant support, characterized by the features of claim 16.

Such plant support offers the advantage that it has a relatively simple structure, that it can be of a constructionally stable design and can readily he used for cultivating plants which are to be displaced in course of time, while after displacement, the roots of the relevant plant will easily provide for anchoring in the ground.

In a particularly advantageous embodiment, a plant support according to the invention is further characterized by the features of claim 22.

A demountable or at least modular design of the plant support offers the advantage that the plant support can be transported in parts, at least prior to use, so that less transport volume is required. Moreover, a plant support can thus be simpler to handle. Prior to use, the desired plant support can then be assembled from the modules supplied. Such plant support moreover offers the advantage that with a limited number of different parts, a large number of plant supports, possibly of different shapes and dimensions, can be built up, which is advantageous in terms of production.

In the further subclaims, further embodiments of a method and plant support according to the invention are described.

To clarify the invention, exemplary embodiments of a method and plant support according to the present invention will be further explained hereinafter, with reference to the accompanying drawings. In these drawings:
Fig. 1 is a front view of a box-shaped element with guide element according to the invention;
Figs. 2A-2C are side elevations of three alternative embodiments of a box-shaped element with guide element according to Fig. 1;
Fig. 3 is a perspective view of three juxtaposed hedge elements according to the invention;
Fig. 4 is a sectional side elevation of a portion of a plant support according to the invention, in a simple embodiment;
Fig. 5 shows a plant support according to Fig. 4 during the raising of a plant, in particular a tree;
Fig. 6 shows a plant support according to Fig. 5, after transplantation;
Fig. 7 shows a plant support with guide element, in two demountable embodiments;
Fig. 8 is a top plan view of a plant support according to Figs. 1-3, in an alternative embodiment;
Fig. 9 shows a plant support according to the invention in a further alternative embodiment; and
Fig. 10 is a side elevation of a noise protection wall built up with elements according to the invention.

In this specification, identical or corresponding parts have identical or corresponding reference numerals. In the embodiments shown, the invention is described with reference to, inter alia, guide plants such as ivy and trees, yet it will be understood that in a method according to the present invention, use can also be made of other sorts of plants, shrubs and trees, both single and in rows or groups.

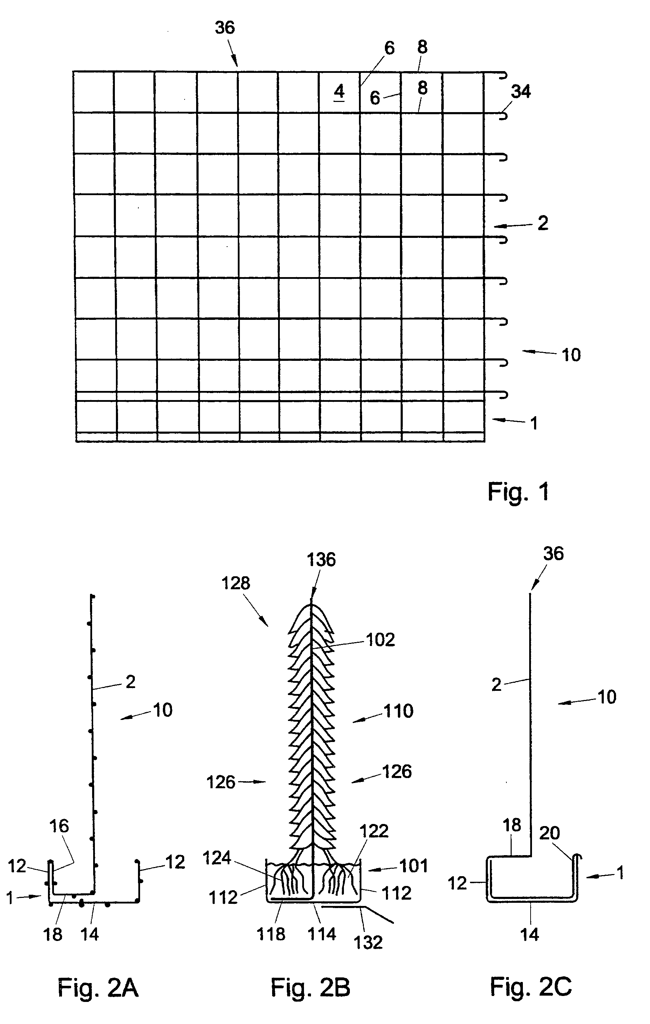

Fig. 1 is a front view of a box-shaped element 1 with guide element 2, manufactured from wire metal, such as, for instance, woven reinforcing steel rods, to obtain a mesh-shaped structure having substantially rectangular openings 4 between upright wires 6 and horizontal wires 8. It will be understood that similarly, other structures can be used as well, as long as at least the wall 12 and/or the bottom 14 of the box-shaped element 1 at least partially have an open structure, while in this embodiment, it is advantageous when along the guide element 2, plants can be guided or possibly secured thereto, in a manner known per se from gardening. It will be understood that the box-shaped element 1 may be manufactured in the same or a similar manner, from the same material, as the guide element 2. In this specification, at least with regard to Figs. 1-3, the assembly of a box-shaped element 1 with guide elements 2 will further be referred to as plant support 10.

Fig. 2A shows a plant support 10 in a first embodiment, in side elevation, with the plant support 10 manufactured in one piece. To that end, a box-shaped element 1 is formed from flat-woven reinforced iron rods by bending the metal, to form two longitudinal walls 12 and a bottom 14. From the upper longitudinal edge of one of the sidewalls 12, parallel to this longitudinal wall 12, a second wall face 16 extends to a position adjacent the bottom, to which a second bottom face 18 connects, extending parallel to the bottom 14 to a position near the center thereof. From the side of the second bottom face 18 remote from the longitudinal wall 12, the guide element 2 then extends vertically. Hence, in such embodiment, the guide element 2 is fixedly connected to the box-shaped element 1, so that a stable, relatively rigid construction is formed and the guide element is simply prevented from becoming detached from the box-shaped element 1.

Fig. 2B is a side elevation of an alternative embodiment of a plant support 110 according to the invention, the box-shaped element 101 being manufactured separately, for instance by bending woven wire metal, to form a bottom 114 and sidewalls 112. The lower end of a guide element 102 formed from woven metal wire has been bent over at right angles to form a second bottom face 118. The second bottom face 118 has a width that is approximately equal to half the width of the bottom 114. For instance by welding, clamping means or the like, the second bottom face 118 is secured to the bottom 114 with its free longitudinal edge connecting to one of the longitudinal walls 112, to realize a stable positioning of the guide element 102 in the box-shaped element 101.

Fig. 2C shows an embodiment of a plant support 10 comparable with the embodiment shown in Fig. 2A, however with the second wall face 16 left out. The second bottom face 18 extends approximately horizontally, at least parallel to the bottom 14, from the upper longitudinal edge of one of the longitudinal walls 12. with the guide element 2 again extending at right angles from the side of the second bottom face 18 remote from the longitudinal wall 12. Such embodiment of a plant support 10 is simpler to manufacture in one piece. However, an embodiment according to Fig. 2A has the advantage that the box-shaped element 1 is entirely clear at its top side, on two sides of the guide element 2.

A plant support 10, 110 according to the invention can be used as follows.

The box-shaped element 1, 101 is covered with a covering material 20, for instance on the inside, as shown in Fig. 2C and Figs. 4-6. In Figs. 2A and 2B, this covering material 20 has been left out for clarity's sake. Preferably, as covering material 20, a biodegradable sheet or film-shaped material is used, optionally having a fine mesh structure. Advantageous is the use of natural fibers such as ramie, coco or the like, with a natural binding agent, such as latex, starch derivatives or the like added thereto. By pressing slightly, a sheet having the desired, relatively open structure is obtained from said fibers and binding agent, at least such a structure that roots, in particular small roots such as root hairs, can grow into and through the covering material. Through a suitable choice of fibers and binding agent, such as coco and latex, a plant support 1 can be obtained which can be disposed above the ground for, for instance, a number of months or even 1-2 years, without its bearing capacity becoming unacceptably low.

The covering of the box-shaped element 1, 101 is preferably folded from a blank, cut from said sheet-shaped material, and pressed in a simple manner on the inside of the box-shaped element. However, strips of covering material may, for instance, also be woven through the meshes of the wall and/or bottom. Other covering manners are, of course, also possible, for instance on the outside or a pressure-molded covering. Next, a growth medium 122, for instance soil, is poured into the box-shaped element 1, 101, onto the covering material 20. The covering material 20 is of such design that the growth medium cannot fall through the bottom 14, 114 or longitudinal wall 12, 112. As long as the plant support is disposed above the ground, roots 124 of plants 126 inserted into the growth medium are prevented from growing to the outside of the box-shaped element 1, 101. The growth is inhibited or even stopped by (day)light. When the box-shaped element 1 is dug in in the ground, the roots will continue to grow, so that a good anchoring is obtained and the plants will be able to absorb sufficient nutrition from the environment.

As shown in Fig. 2B, plants 126 are placed in the growth medium 122, on both sides of the guide element 102 in the embodiment shown, which plants 126 will grow in a guided manner along the guide element, such that the guide element 2, 102 is covered thereby at least substantially completely. This may involve the use of at least initially fast-growing plants. Thus, a hedge element 128 exhibiting a desired separating action can quickly be obtained.

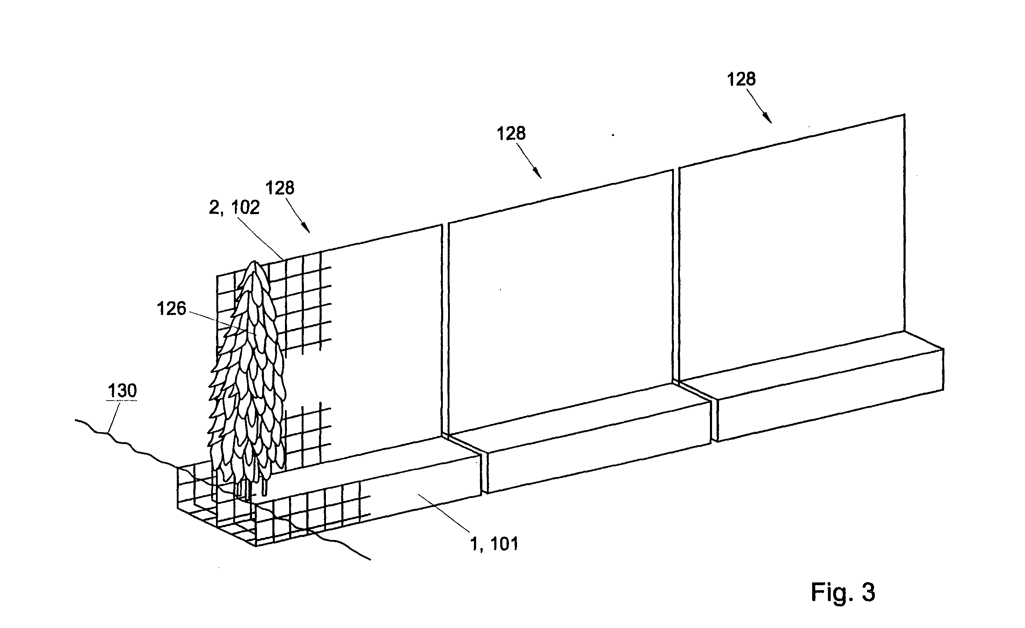

Fig. 3 is a perspective, schematic view of three adjoining, juxtaposed hedge elements 128. Of each hedge element 128, the box-shaped element 1, 101 has been dug in the ground, shown schematically in Fig. 3 by the line 130. The guide elements 2, 102 extend approximately vertically, with the plants 126 thereagainst to form a substantially closed foliage.

As shown in Fig. 2, a plant support 110 can be disposed with its bottom 114 on a floor 132, for instance in a greenhouse, for the initial growth of the plants 126 therein. When, in the opinion of a user, the plants 126 have grown sufficiently, the relevant hedge element 128 can be picked up from the floor 132 and transferred to, for instance, a garden where the hedge elements 128 can be dug in in the manner shown in Fig. 3, to form the desired hedge.

In the embodiment shown in Fig. 3, a straight hedge is formed with the plant supports 1, 101. However, it will be understood that by means of the hedge elements 128, differently shaped hedges may likewise be obtained. In the embodiment shown in Fig. 1, the plant support 10 is on one side provided with hook elements 34, capable of hooking around an upright 6 of an adjoining plant support 10, to obtain a slightly fixed connection between linked plant supports 10. Moreover, the stability of the various plant supports can thus be increased even further. An additional advantage of a hedge according to the invention is that it can readily be kept at a desired level. Indeed, the hedge, or at least the plants 126, can readily be clipped right above the upper edge 36, 136 of the guide element 2, 102. For that matter, in particular when use is made of climbing plants, these plants will at least substantially not grow above said upper longitudinal edge 36, 136, but fall back against the side of the guide element 2, 102, whereby the height of the hedge element is limited in a natural fashion.

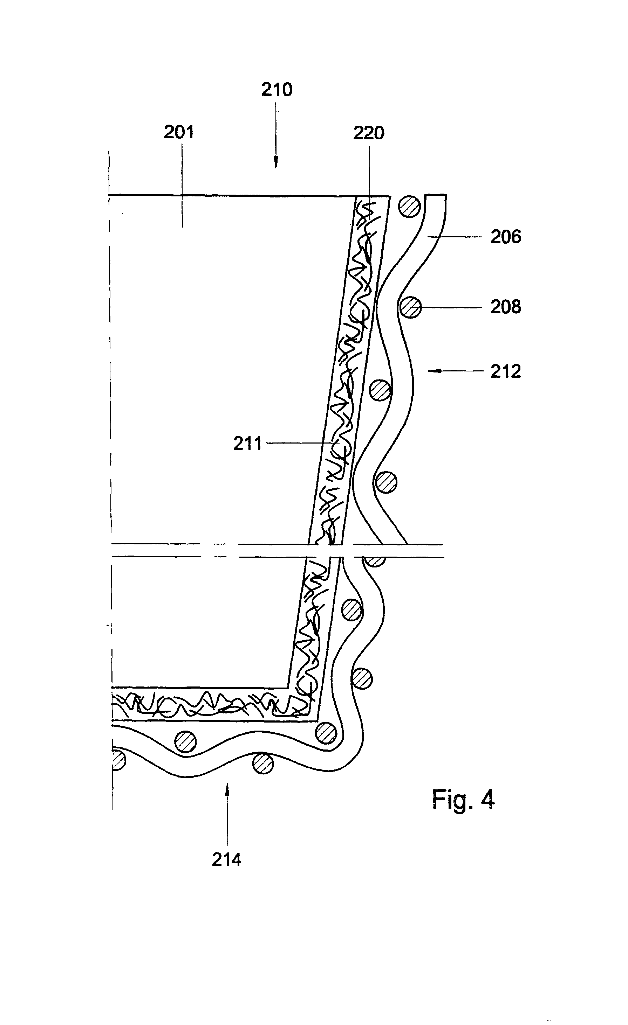

Fig. 4 is a sectional side elevation of a portion of a plant support 210 according to the invention. This plant support 210 comprises a box-shaped element 201, without a guide element in the exemplary embodiment shown. The box-shaped element 201 is built up from a mesh-shaped structure as shown in Fig. 1, with vertical wires 206 and horizontal wires 208. Accordingly, the wall 212 and the bottom 214 have a substantially mesh-shaped, open wall structure. Provided on the inside of the box-shaped element 201 is a covering 220, which is, for instance, folded from a blank or pressed. The covering 220 is manufactured from a covering material composed from substantially natural fibers, in particular coco fibers, ramie fibers or like elongated fibers, and a binding agent, in particular a natural binding agent such as latex, as described earlier with regard to Fig. 2. As appears from the section, the fibers 211 constitute a wall structure which is relatively open but whose openings are much smaller than the meshes in the box-shaped element. The structure of the covering material can readily be selected, for instance on the basis of the desired lifetime and degrading time, the desired porosity and bearing capacity and the like, so that in each case, an optimum plant support can be designed.

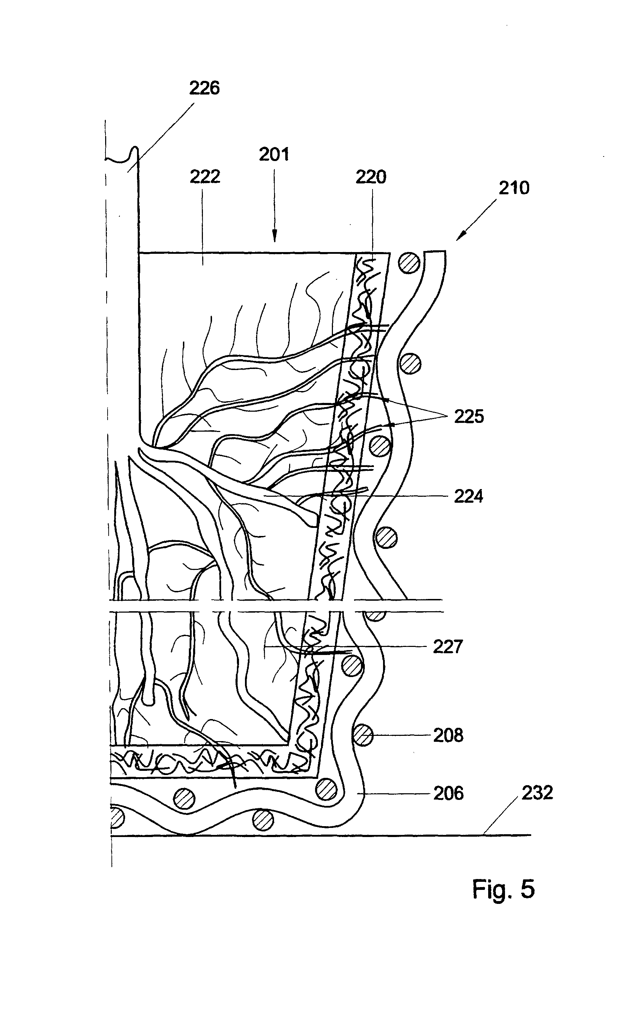

Fig. 5 shows the portion of the plant support 210 according to Fig. 4, during the raising of a plant 226, in particular in the form of a tree. However, other plants can of course also be cultivated herein, for instance shrubs such as firethorn or like self-supporting, relatively dense-growing plants capable of forming, for instance, a hedge element. In the embodiment shown in Fig. 5, the plant support 210 is disposed on a bottom face 232, while a growth medium 222 has been poured into the box-shaped element 201. In the growth medium 222, a plant 226 is placed, tended such that a network of roots 224 has been formed. A number of thinner roots 224 has grown through the covering 220, passing fibers 211, until an end 225 of the relevant roots 224 has reached the side of the covering 220 facing away from the inside of the box-shaped element 210. In that case, the growth stops or is at least inhibited considerably, due to the light into which the roots 224 reach. This readily prevents the roots from growing far outside the plant support 210, while the roots do in fact extend at least partially through the covering 220 in a direction which encloses an angle with the plane of the relevant wall 212 or the bottom 214. Root hairs 227 will grow through the covering 220 as well, while, moreover, a number of root hairs 227 will grow into the covering 220.

After the plant 226 has been raised sufficiently in the plant support 210 in the position shown in Fig. 5, the plant support 210 is picked up together with the plant 226 from the bottom 232 and moved into an operating position, where the plant support 210 at least with the box-shaped element 201 is dug in in the ground 230. Next, the plant 226 is allowed to grow further, while the roots 224 will directly grow on to far outside the box-shaped element 210. The ends 225 of the roots 224 will grow beyond the covering 220, while forming a strongly branched network of roots 224, including root hairs 227, as a result of which the plant 226 will quickly obtain a sufficiently stable anchoring in the ground 230. After a passage of time, the covering 220 will be biodegraded and only the box-shaped element 201 remains behind in the ground, in so far as it will not decompose after a longer passage of time.

As appears from the above description, when a plant support according to the present invention is used, the plant need not be taken from the plant support before it can be transplanted. Because the roots can simply grow through the covering material of the covering 220, they will, after the plant support has been put in the ground at least partially, be able to grow "straight on" simply, unlike the known plant supports, where the roots will be substantially coiled up because of the wall of the pot.

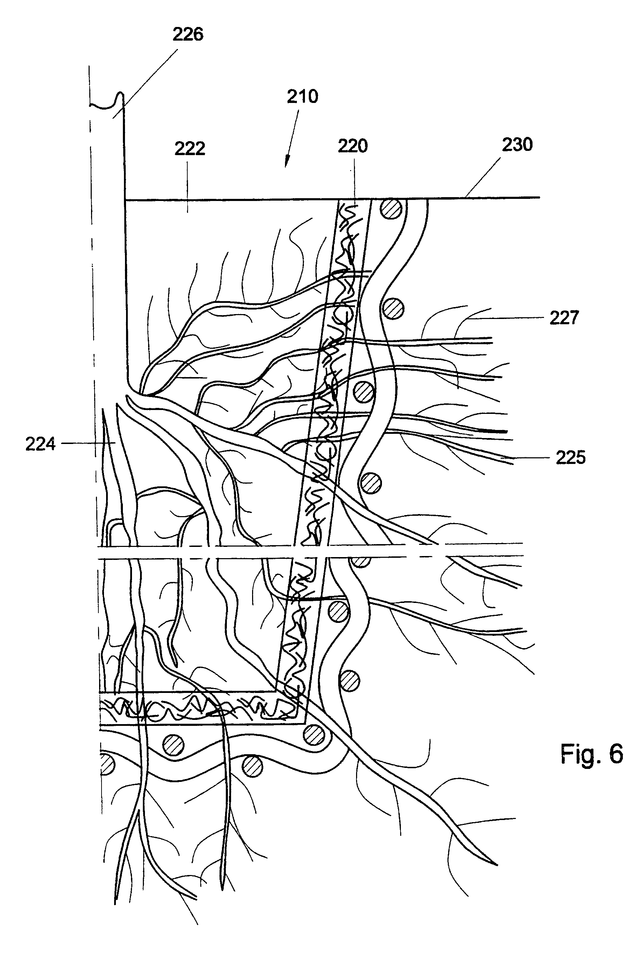

Instead of receiving a plant support 210 in the ground, as shown in Fig. 6, the plant support can also be arranged entirely, at least substantially completely, above the ground, such that substantially only the bottom face 14, 114, 214 is received on or in the ground 130, 230. The roots 224 will then grow into the ground substantially only through the bottom face. By suitable means, such as a tent pegs, ground pins or the like, the box-shaped element can easily be fixed to the ground at least temporarily, while the ground pins can easily engage preferably the horizontal wires. By suitable means, such as plate material, the sidewalls 212 can then be covered, if so desired.

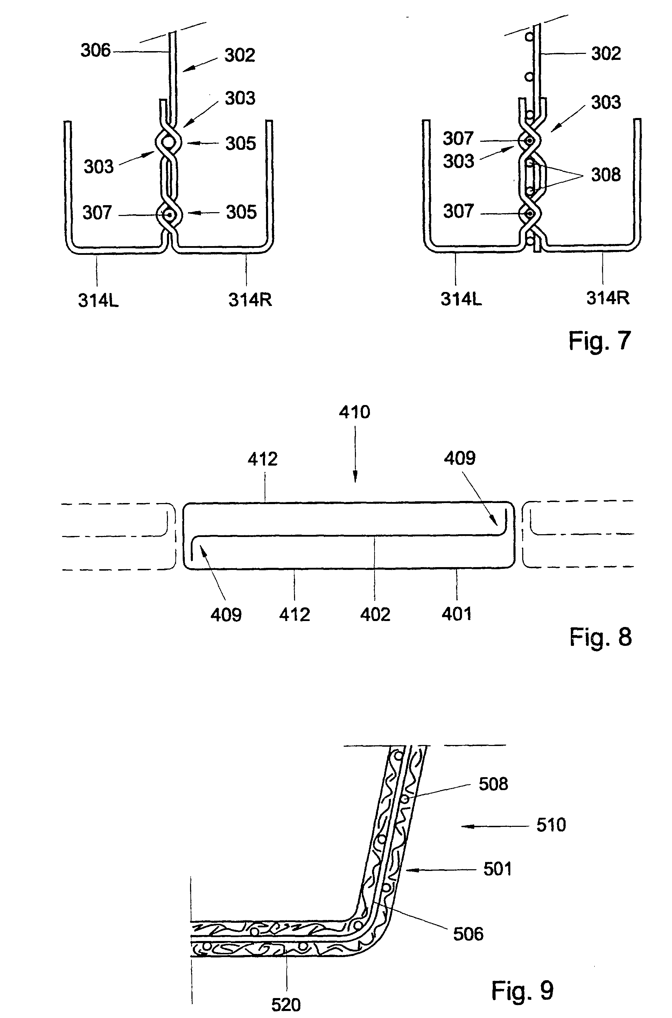

Fig. 7 shows, in side elevation, two embodiments of a plant support having a guide element, built up from separate parts. On the left-hand side, a grid-shaped element as described with reference to Fig. 1 is twice bent over at right angles adjacent a lower end thereof, rightwards in Fig. 7, to obtain a guide element 302 having attached thereto a right box element 314R. In the guide element 302, at the level of the box 314R, two slots 303 are provided, extending throughout the width of the guide element 302, by bending over the uprights 306 locally. From a comparable, mesh-shaped material, a second, left box-shaped element 314L is formed by bending over at right angles twice, whose dimensions in the embodiment shown are approximately equal to the right box 314R. In one of the vertical walls of the box-shaped element 314L, there are likewise provided two slotted recesses 303, flush with the slotted recesses in the guide element 302, yet in opposite direction. In the embodiment shown, this is outwards. As appears clearly from Fig. 7. on the left-hand side, when the left box 314L is slid against the guide element 302, an approximately square passage 305 is formed on the side remote from the right box 314R, between the slotted recesses 303. Into each of these passages 305, a bar 307 is inserted, so that the left box-shaped element 314L is secured against the guide element 302. Thus, a particularly stable connection is effected, while transport is readily possible in separate parts.

In Fig. 7, on the right-hand side, an alternative embodiment is shown, wherein a guide element 302 is used which is substantially flat. On either side thereof, a box-shaped element 314L, R is provided, constructed like the left box-shaped element 314L in Fig. 7 as discussed earlier. The two box-shaped elements 314L,R have been slid from both sides against the guide element 302, such that between the slotted recesses 303, the bar element 307 can again be slid, with simultaneous inclusion of the guide element 302. The position of the deformations 303 is chosen so that displacement in vertical direction is not possible, because the deformations 303 abut against horizontal wires 308 of the guide element 302.

It will be understood that other manners of modular construction of an apparatus according to the invention are also possible, for instance through the use of clamping means, screwing means and the like, known per se. Thus, for instance clamping plates can be fixed from either side against box-shaped elements 314 and/or guide elements 302, whereby vertical 306 and/or horizontal wires 308 are clamped. These and many comparable variations will be readily understood by anyone skilled in the art. It is further observed that in Fig. 7 no covering material is shown, for the sake of clarity. However, during use, this covering material will in fact usually be applied.

Fig. 8 is a top plan view of a further advantageous embodiment of a plant support 410 with guide element 402 and box-shaped element 401. The box-shaped element 401 is U-shaped, as for instance shown in Fig. 2b. The longitudinal edges 409 of the guide element 402, which edges are vertical during use, are bent over at right angles in opposite directions relative to the plane of the guide element 402, so that the guide element is slightly Z-shaped in top plan view. On either side, the edges are bent over such that the guide element 402 can be placed in the box-shaped element 401, between the vertical walls 412, with the bent-over portions abutting against said vertical walls 412. By means of, for instance, clamping means, binding means, screw means or the like, or possibly by means of, for instance. welding or gluing techniques, the bent-over longitudinal edges 409 are secured to the vertical wall parts 412, to produce a structurally simple, stable construction, while the bent-over longitudinal edges 409 moreover provide stiffening of the guide element 402. The further advantage thus achieved is that the guide elements 402 can also be used without, for instance, support poles or the like, when relatively light material is used for the manufacture thereof. Thus, a hedge or comparable construction can be formed with such elements in an even simpler manner.

When different plant supports 410 are disposed side by side, as shown in Fig. 8, the bent-over longitudinal edges 409 of juxtaposed plant supports 410 can be intercoupled, for instance by binding means such as wire or tie wraps, to increase its stiffness. For that purpose, mirror symmetrical plant supports 410 can be used, as shown in Fig. 8 on the right-hand side, or identical plant supports, as shown in Fig. 8 on the left-hand side. Also, the longitudinal edges 409 of a guide element 402 can be bent over to the same side, which may in particular be advantageous when relatively narrow box-shaped elements 401 are used. It will be understood that in other places, too, comparable bent-over portions can be provided in the guide element, with comparable stiffening effects.

Fig. 9 shows a portion of a box-shaped element 501 of a plant support 510 according to the invention, comparable with, for instance, Fig. 4. In this embodiment, the horizontal wires 508 and vertical wires 506, which together form the mesh-shaped structure as shown in Fig. 1, are incorporated into the covering material 520. The covering 520 is again composed as described with reference to Fig. 4. In this embodiment, the box-shaped element 501 is preferably formed from a flat plate of mesh-shaped material which, before it is bent over, is covered on both sides with said covering material 520. For that purpose, the covering material 520 is pressed, glued or provided in another suitable manner around the mesh-shaped element. If necessary, the covering material can also be woven through the openings of the mesh-shaped element or provided therethrough in another manner. After the provision of the covering 520, the element is subsequently bent over to form the box-shaped element 501, possibly after it has been cut to measure. However, it is also possible to fix the covering material 520 after bending of the box-shaped element 501. This manner of covering, wherein the mesh-shaped element is incorporated into the covering, offers the advantage of requiring fewer manufacturing operations, while, moreover, the mesh-shaped element is covered towards the outside.

It will be understood that the alternative embodiments shown in Figs. 7, 8 and 9 of at least parts of a plant support according to the invention can also be applied to the other exemplary embodiments shown, in the same or a similar manner.

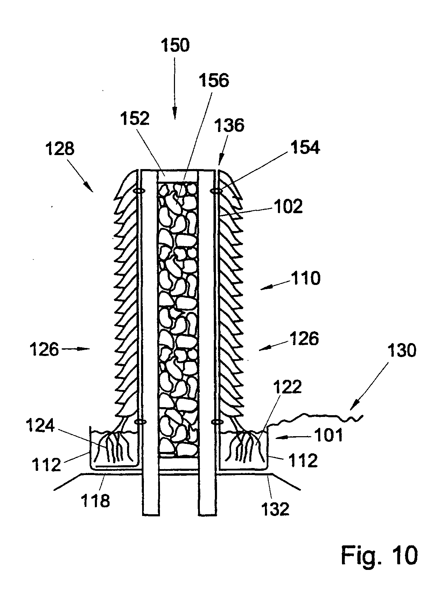

Fig. 10 is a schematic side elevation of a noise protection wall 150, for instance for use along a road, railroad or the like. The noise protection wall 150 is built up from a number of regularly spaced apart trestles 152 secured in the ground 132. Against the trestles, on one or, as in the exemplary embodiment shown, both sides thereof, an apparatus 10, 110 according to the invention is placed, in an embodiment where a guide element 102 has only one side thereof provided with a box-shaped element 1, 101. Via the guide element, the apparatus 10, 110 is connected to the trestle 152, schematically represented by loops 154. The box-shaped elements 1, 101 can again be dug in in the ground 130, but may also be placed on a slope, schematically represented by 132. Digging in offers the advantage of providing a firmer construction. Next, between the trestles 152 and the guide elements 102, a filling material is provided, lava stone 156 in the embodiment shown. Lava stone absorbs noise in a particularly effective manner. Thus, a noise wall can be obtained in a particularly fast and simple manner, at relatively low costs. The elements 10, 110 used can have a relatively great height and length, for instance 3-5 m, enabling working fast. Since the roots 124 will grow to the outside of the box-shaped elements 1, 101, a firm anchoring is obtained, while, moreover, the vegetation will stay alive for a very long time. Thus, a well-overgrown noise wall is maintained, so that its noise-resistant, or at least the noise-absorbing features are increased even further.

The invention is in no way limited to the exemplary embodiments given in the specification and the Figures. Many variations thereof are possible within the scope of the invention.

Thus, the guide element can be positioned otherwise relative to the box-shaped element, for instance parallel to the longitudinal wall of the box-shaped element, while, moreover, the box-shaped element may also be constructed differently, for instance with diverging longitudinal walls. Both the box-shaped element and the guide element may be manufactured from other materials, for instance plastic, with openings formed otherwise, for instance perforated plate, while, moreover, one or more box-shaped elements may be directly formed from the material earlier described as covering material. Also, a hedge element according to the invention may be arch-shaped, with a box-shaped element on one or both sides of an arc element, for instance suitable for guiding roses. In principle, a plant support according to the invention may have any desired dimension. Thus, a hedge element shown in Figs. 1-3 has, for instance, a guide element whose size is about 2x2 m, but this may easily be adjusted to a user's wishes. Plant supports with or without guide element may be of a narrower design and provided with suitable coupling means, so that transportation is simplified, a greater freedom of design is realized and sufficient stability is maintained all the same. A plant support according to the invention can further be, for instance, bent, in top plan view as well as in side view.

These and many comparable variations are understood to fall within the scope of the invention as set out by the appended claims.

## Claims

1. A method for manufacturing a plant support, wherein a box-shaped element is manufactured having an at least partially open wall, the box-shaped element being at least partially covered with a covering material, said covering material being provided in such a manner that it covers the partially open wall at least partially, such that the wall becomes soil-proof, while roots of a plant or the like, growing in the pot during use, can grow at least partially through the covering material and the wall to the outside of the plant support, **characterized in that** as covering material a material is manufactured from substantially biodegradable material.

2. A method according to claim 1, wherein the box-shaped element is at least substantially manufactured from material having a mesh-shaped structure.

3. A method according to claim 1 or 2, wherein the box-shaped element is substantially manufactured from wire material.

4. A method according to any one of the preceding claims, wherein as covering material, a material is manufactured from natural materials, in particular from at least natural fibers and binding agent.

5. A method according to claim 4, wherein a covering material is used substantially built up from coco fibers and binding agent, in particular latex.

6. A method according to any one of the preceding claims, wherein from the covering material, a sheet-shaped element is taken which is folded into covering of the box-shaped element.

7. A method according to any one of the preceding claims, wherein the covering material is secured in the wall of the box-shaped element, in particular woven therein.

8. A method according to any one of the preceding claims, wherein a substantially vertically extending guide element is secured in or to the box-shaped element or formed integrally therewith said guide element extending above the surface of the box-shaped element and, during use, functioning as guide for plants and the like growing in the box-shaped element.

9. A method for cultivating plants and the like, utilizing a plant support manufactured by a method according to any one of the preceding claims, wherein the box-shaped element is substantially disposed above the ground, such that the outer side of at least a longitudinal wall thereof is free, whereupon the box-shaped element is filled with soil and at least one plant or the like is planted therein, whereupon the or each plant is treated such that root growth occurs, partly extending also through the covering material, such that the ends of a number of roots are located approximately in the outer face of the wall, while after sufficient growth of the plant, the plant support with the or each plant is picked up and moved to another position.

10. A method according to claim 9, wherein the plant support in said other position is secured in or to ground.

11. A method according to claim 10, wherein the plant support is dug in in the ground, such that roots of the or each plant grow outside through the plant support, into the ground, and provide for anchoring and nutrition.

12. A method according to claim 10, wherein the plant support is placed on ground, such that roots of the or each plant can grow through a bottom of the plant support into the ground, for anchoring and nutrition.

13. A method for manufacturing a hedge, wherein a number of plant supports, each comprising at least one substantially vertically extending guide element along which at least one guidable plant is cultivated utilizing a method according to claim 9, are juxtaposed utilizing a method according to claim 10 or 11, for forming a substantially closed, elongated hedge.

14. A method according to claim 13, wherein plants are guided on both sides of the at least one guide element, such that the at least one guide element is substantially entirely enclosed by the plants.

15. A hedge, at least a hedge element, manufactured by a method according to claim 13 or 14.

16. A plant support, comprising a box element having an at least partially open wall, said wall being substantially covered with a covering material selected so that roots of a plant or the like placed in the plant support can grow through the covering material to the outside of the box-shaped element, while soil poured into the box-shaped element substantially cannot pass the covering material, **characterised in that** as covering material a material is used manufactured from substantially biodegradable material.

17. A plant support according to claim 16, wherein at least the box-shaped element is covered with a covering material which, during use, at least temporarily prevents root growth to the outside of the box-shaped element.

18. A plant support according to claim 16 or 17, wherein the box-shaped element is covered with the covering material substantially on the inside, said covering material being in particular composed from substantially natural fibers and binding agent and having a relatively open structure.

19. A plant support according to any one of claims 16-18, wherein a guide element is provided which, during use, can extend substantially vertically and can be connected to the box-shaped element, for guiding plants or the like to be grown in the plant support.

20. A plant support according to claim 19, suitable and intended for use with a method according to claim 13 or 14 or in a hedge according to claim 15.

21. A plant support according to claim 19 or 20, wherein the box-shaped element and the guide element are manufactured in one piece, preferably from mesh-shaped material such as woven wire metal.

22. A plant support according to any one of claims 16-20, wherein the plant support is of demountable, or at least modular design.

23. A plant support according to claim 22, comprising a guide element, wherein at least one box-shaped element is provided which, by means of fasteners, is detachably mountable against the guide element, adjacent the bottom side thereof.

## Patentansprüche

1. Verfahren zur Herstellung einer Pflanzenstütze, bei dem ein kastenförmiges Element hergestellt wird, das eine wenigstens teilweise offene Wand aufweist, wobei das kastenförmige Element wenigstens teilweise mit einem Abdeckmaterial bedeckt ist, das derart vorgesehen ist, daß es die teilweise offene Wand mindestens teilweise bedeckt, so daß die Wand erddicht ist, während Wurzeln einer Pflanze oder dergleichen, die im Gebrauch in dem Topf wachsen, wenigstens teilweise durch das Abdeckmaterial und die Wand auf die Außenseite der Pflanzenstütze wachsen können, **dadurch gekennzeichnet, daß** als Abdeckmaterial ein Material aus im wesentlichen biologisch abbaubarem Material hergestellt wird.

2. Verfahren nach Anspruch 1, bei dem das kastenförmige Element wenigstens teilweise aus einem Material mit maschenförmiger Struktur hergestellt wird.

3. Verfahren nach Anspruch 1 oder 2, bei dem das kastenförmige Element im wesentlichen aus Drahtmaterial hergestellt wird.

4. Verfahren nach einem der vorhergehenden Ansprüche, bei dem als das Abdeckmaterial ein Material aus natürlichen Materialien, insbesondere wenigstens aus Naturfasern und Bindemitteln, hergestellt wird.

5. Verfahren nach Anspruch 4, bei dem ein Abdeckmaterial verwendet wird, das im wesentlichen aus Kokosfasern und Bindemittel, insbesondere Latex, aufgebaut ist.

6. Verfahren nach einem der vorhergehenden Ansprüche, bei dem aus dem Abdeckmaterial ein bahnförmiges Element genommen wird, das zur Abdeckung des kastenförmigen Elements gefaltet wird.

7. Verfahren nach einem der vorhergehenden Ansprüche, bei dem das Abdeckmaterial in der Wand des kastenförmigen Elements befestigt wird, insbesondere hinein gewoben wird.

8. Verfahren nach einem der vorhergehenden Ansprüche, bei dem ein im wesentlichen vertikal verlaufendes Führungselement in oder an dem kastenförmigen Element angebracht oder einstückig damit ausgebildet wird, wobei das Führungselement sich über der Räche des kastenförmigen Elements erstreckt und im Gebrauch als Führung für in dem kastenförmigen Element wachsende Pflanzen und dergleichen dient.

9. Verfahren zum Anbauen von Pflanzen und dergleichen unter Verwendung einer nach dem Verfahren nach einem der vorhergehenden Ansprüche hergestellten Pflanzenstütze, bei dem das kastenförmige Element im wesentlichen über dem Boden angeordnet ist, so daß die Außenseite wenigstens einer Längswand desselben freiliegt, woraufhin das kastenförmige Element mit Erde gefüllt wird und wenigstens eine Pflanze oder dergleichen darin gepflanzt wird, wonach die oder jede Pflanze derart behandelt wird, daß Wurzelwachstum einsetzt, das sich teilweise auch durch das Abdeckmaterial erstreckt, so daß die Enden einer Anzahl von Wurzeln ungefähr in der Außenfläche der Wand angeordnet ist, während nach ausreichendem Wachstum der Pflanze, die Pflanzenstütze mit der oder jeder Pflanze aufgenommen und an eine andere Stelle verbracht wird.

10. Verfahren nach Anspruch 9, bei dem die Pflanzenstütze in der anderen Position im oder am Boden angeordnet wird.

11. Verfahren nach Anspruch 10, bei dem die Pflanzenstütze in den Boden eingegraben wird, so daß Wurzeln der oder jeder Pflanze durch die Pflanzenstütze nach außen in den Boden wachsen und Halt sowie Ernährung bewirken.

12. Verfahren nach Anspruch 10, bei dem die Pflanzenstütze auf dem Boden angeordnet wird, so daß Wurzeln der oder jeder Pflanze zur Verankerung und Ernährung durch den Boden der Pflanzenstütze in den Boden wachsen können.

13. Verfahren zum Bilden einer Hecke, bei dem eine Anzahl von Pflanzenstützen, die jeweils wenigstens ein sich im wesentlichen vertikal erstreckendes Führungselement aufweisen, entlang dessen wenigstens eine führbare Pflanze unter Verwendung eines Verfahrens nach Anspruch 9 gezogen wird, unter Verwendung eines Verfahrens nach Anspruch 10 oder 11 nebeneinander angeordnet wird, um eine im wesentlichen geschlossene langgestreckte Hecke zu bilden.

14. Verfahren nach Anspruch 13, bei dem Pflanzen auf beiden Seiten des wenigstens einen Führungselements geführt werden, so daß das wenigstens eine Führungselementim wesentlichen vollständig von den Pflanzen umschlossen ist.

15. Hecke, zumindest ein Heckenelement, gebildet nach einem Verfahren gemäß Anspruch 13 oder 14.

16. Pflanzenstütze mit einem kastenförmigen Element, das eine wenigstens teilweise offene Wand aufweist, die wenigstens teilweise mit einem Abdeckmaterial bedeckt ist, das derart gewählt ist, daß Wurzeln einer Pflanze oder dergleichen, die in dem Topf angeordnet ist, durch das Abdeckmaterial auf die Außenseite des kastenförmigen Elements wachsen können, während in das kastenförmige Element geschüttete Erde das Abdeckmaterial im wesentlichen nicht durchdringen kann, **dadurch gekennzeichnet, daß** als Abdeckmaterial ein Material aus im wesentlichen biologisch abbaubarem Material verwendet wird.

17. Pflanzenstütze nach Anspruch 16, bei der wenigstens das kastenförmige Element mit einem Abdeckmaterial bedeckt ist, das im Gebrauch wenigstens vorübergehend Wurzelwachstum auf die Außenseite des kastenförmigen Elements verhindert.

18. Pflanzenstütze nach Anspruch 16 oder 17, bei der das kastenförmige Element mit dem Abdeckmaterial im wesentlichen auf der Innenseite bedeckt ist, wobei das Abdeckmaterial insbesondere aus im wesentlichen Naturfasern und Bindemittel zusammengesetzt ist und eine relativ offene Struktur aufweist.

19. Pflanzenstütze nach einem der Ansprüche 16-18, bei der ein Führungselement vorgesehen ist, das sich im Gebrauch im wesentlichen vertikal erstrecken kann und mit dem kastenförmigen Element zum Führen von Pflanzen oder dergleichen, die in der Pflanzenstütze wachsen sollen, verbindbar ist

20. Pflanzenstütze nach Anspruch 19, geeignet und beabsichtigt zur Verwendung mit einem Verfahren nach Anspruch 13 oder 14 oder in einer Hecke nach Anspruch 15,

21. Pflanzenstütze nach Anspruch 19 oder 20, bei der das kastenförmige Element und das Führungselement in einem Stück hergestellt sind, vorzugsweise aus maschenförmigem Material wie Drahtgewebematerial,

22. Pflanzenstütze nach einem der Ansprüche 16-20, bei der die Pflanzenstütze demontierbar oder zumindest modular ausgebildet ist.

23. Pflanzenstütze nach Anspruch 22, mit einem Führungselement, bei der wenigstens ein kastenförmiges Element vorgesehen ist, das durch Befestigungseinrichtungen lösbar an dem Führungselement nahe der Unterseite desselben angebracht werden kann.

## Revendications

1. Procédé de fabrication d'un support pour plante, dans lequel un élément en forme de caisson est fabriqué de manière à présenter une paroi au moins partiellement ouverte, l'élément en forme de caisson étant au moins partiellement recouvert d'un matériau de recouvrement, ledit matériau de recouvrement étant fourni de manière telle qu'il recouvre la paroi partiellement ouverte au moins partiellement, de sorte que la paroi résiste à la terre, tandis que les racines d'une plante ou similaires, poussant dans le pot à l'usage, peuvent pousser au moins partiellement à travers le matériau de recouvrement et la paroi vers l'extérieur du support pour plante, **caractérisé en ce que** le matériau de recouvrement est un matériau fabriqué à partir d'un matériau sensiblement biodégradable.

2. Procédé selon la revendication 1, dans lequel l'élément en forme de caisson est fabriqué au moins sensiblement à partir d'un matériau ayant une structure en mailles.

3. Procédé selon la revendication 1 ou la revendication 2, dans lequel l'élément en forme de caisson est fabriqué sensiblement à partir de fil métallique.

4. Procédé selon l'une quelconque des revendications précédentes, dans lequel, en tant que matériau de recouvrement, un matériau est fabriqué à partir de matériaux naturels, en particulier à partir de fibres au moins naturelles et de liant.

5. Procédé selon la revendication 4, dans lequel le matériau de recouvrement que l'on utilise est constitué sensiblement de fibres de coco et de liant, en particulier du latex.

6. Procédé selon l'une quelconque des revendications précédentes, dans lequel à partir du matériau de recouvrement, un élément en forme de feuille est prélevé puis plié pour recouvrir l'élément en forme de caisson.

7. Procédé selon l'une quelconque des revendications précédentes, dans lequel le matériau de recouvrement est fixé dans la paroi de l'élément en forme de caisson, en particulier tissé dans celui-ci.

8. Procédé selon l'une quelconque des revendications précédentes, dans lequel un élément formant guide s'étendant sensiblement verticalement est fixé dans ou sur l'élément en forme de caisson ou forme partie intégrante avec celui-ci, ledit élément formant guide s'étendant au-dessus de la surface de l'élément en forme de caisson et, à l'usage, fonctionnant en tant que guide pour plantes et similaires poussant dans l'élément en forme de caisson.

9. Procédé pour cultiver des plantes et similaires, utilisant un support pour plante fabriqué par un procédé selon l'une quelconque des revendications précédentes, dans lequel l'élément en forme de caisson est sensiblement disposé au-dessus du sol, de sorte que le côté extérieur d'au moins une paroi longitudinale de celui-ci soit libre, moyennant quoi l'élément en forme de caisson est rempli de terre et au moins une plante ou similaires est plantée dedans, moyennant quoi la ou chaque plante est traitée de sorte que les racines poussent, s'étendant partiellement également à travers le matériau de recouvrement, de sorte que les extrémités d'un certain nombre de racines soient situées environ sur la face extérieur de la paroi, tandis qu'après une croissance suffisante de la plante, le support pour plante avec la ou chaque plante est ramassé et déplacé dans une autre position.

10. Procédé selon la revendication 9, dans lequel le support pour plante dans ladite autre position est fixé dans ou au sol.

11. Procédé selon la revendication 10, dans lequel une partie du support pour plante est enfoui dans le sol, de sorte que les racines de la ou de chaque plante poussent vers l'extérieur à travers le support pour plante, dans le sol, et assurent le maintien et la nutrition.

12. Procédé selon la revendication 10, dans lequel le support pour plante est placé sur le sol, de sorte que des racines de la ou de chaque plante puissent pousser à travers un fond du support pour plante dans le sol, pour assurer le maintien et la nutrition.

13. Procédé de fabrication d'une haie, dans lequel un certain nombre de supports de plante, comprenant chacun au moins un élément formant guide s'étendant sensiblement verticalement le long duquel au moins une plante pouvant être guidée est cultivée en utilisant un procédé selon la revendication 9, sont juxtaposés en utilisant un procédé selon la revendication 10 ou la revendication 11, pour former une haie allongée sensiblement fermée.

14. Procédé selon la revendication 13, dans lequel des plantes sont guidées des deux côtes du au moins un élément de guidage, de sorte que le au moins un élément de guidage soit entouré sensiblement entièrement par les plantes.

15. Haie, au moins un élément de haie, fabriqué par un procédé selon la revendication 13 ou la revendication 14.

16. Support pour plante, comprenant un élément formant caisson ayant une paroi au moins partiellement ouverte, ladite paroi étant sensiblement recouverte d'un matériau de recouvrement sélectionné de sorte que les racines d'une plante ou similaires placée dans le support pour plante puissent pousser à travers le matériau de recouvrement vers l'extérieur de l'élément en forme de caisson, tandis que de la terre versée dans l'élément en forme de caisson ne peut sensiblement pas passer à travers le matériau de recouvrement, **caractérisé en ce que** le matériau de recouvrement utilisé est un matériau fabriqué à partir d'un matériau sensiblement biodégradable.

17. support pour plante selon la revendication 16, dans lequel au moins l'élément en forme de caisson est recouvert d'un matériau de recouvrement qui, à l'usage, empêche au moins temporairement la croissance de racines vers l'extérieur de l'élément en forme de caisson.

18. Support pour plante selon la revendication 16 ou la revendication 17, dans lequel l'élément en forme de caisson est recouvert du matériau de recouvrement sensiblement à l'intérieur, ledit matériau de recouvrement étant en particulier composé de fibres sensiblement naturelles et de liant et présentant une structure relativement ouverte.

19. Support pour plante selon l'une quelconque des revendications 16 à 18, dans lequel un élément formant guide est prévu, lequel, à l'usage, peut s'étendre sensiblement verticalement et peut être connecté à l'élément en forme de caisson, pour guider des plantes ou similaires afin qu'elles poussent dans le support pour plante.

20. Support pour plante selon la revendication 19, adapté et prévu pour être utilisé avec un procédé selon la revendication 13 ou la revendication 14 ou dans une haie selon la revendication 15.

21. Support pour plante selon la revendication 19 ou la revendication 20, dans lequel l'élément en forme de caisson et l'élément formant guide sont fabriqués en une seule pièce, de préférence à partir de matériau à mailles, tel que du treillis métallique,

22. Support pour plante selon l'une quelconque des revendications 16 à 20, dans lequel le support pour plante peut être démonté, ou présente au moins une conception modulaire.

23. Support pour plante selon la revendication 22, comprenant un élément formant guide, dans lequel est prévu au moins un élément en forme de caisson qui, à l'aide d'attaches, peut être monté de façon détachable contre l'élément formant guide, de manière adjacente au côté inférieur de celui-ci.
